# EUROPEAN PATENT SPECIFICATION

(11) **EP 4 435 589 B1**
(45) Date of publication and mention of the grant of the patent: **06.05.2026**
(21) Application number: 24163825.3
(22) Date of filing: 15.03.2024
(51) Int. Cl.: G06F 8/61, G06F 8/65, G06F 8/71

(54) **DYNAMIC SOFTWARE INVENTORY MANAGEMENT**
DYNAMISCHE SOFTWARE-INVENTARVERWALTUNG
GESTION DYNAMIQUE D'INVENTAIRE DE LOGICIEL

(30) Priority: 20.03.2023 US 202363453189 P
(43) Date of publication of application: 25.09.2024
(73) Proprietor: Rocket Software, Inc., Waltham, MA 02451 (US)
(72) Inventor: Gomes, Henric, Waltham, MA 02451 (US); Csapo, Gerald, Waltham, MA 02451 (US); Huard, Rodolphe, Waltham, MA 02451 (US); Orlov, Yurii, Waltham, MA 02451 (US)
(74) Representative: Herrero & Asociados, S.L.

(56) References cited:
- US-A1- 2006 080 656
- US-A1- 2010 257 518

## Description

### CROSS REFERENCE TO RELATED APPLICATIONS

The present application claims the benefit of and priority to co-pending United States provisional application no. 63/453,189, filed on March 20, 2023.

### TECHNICAL FIELD

Embodiments described herein generally relate to systems and methods for providing dynamic software inventory management and, more particularly but not exclusively, to systems and methods for providing recommendations regarding software updates.

### BACKGROUND

Various organizations and other entities may acquire software from vendors for a variety of purposes. For example, a business may purchase collaboration tools from a vendor so that employees of the business may easily collaborate and communicate with each other.

Vendors often release various updates and/or patches for their software, such as updates to fix "bugs" and other errors. Vendors may identify a particular problem and/or deficiency related to a current software version, create an update to mitigate the problem and/or deficiency, and deliver the update to their clients.

Conventionally, vendors may periodically instruct and/or advise clients to update their software to the latest release. However, clients may be hesitant and/or unwilling to apply the suggested update. For example, clients may believe that applying the update has no real benefit, they may forget to download the update, they may not apply the update properly, and/or they may miss an announcement regarding the update. In particular, in many scenarios, clients may have unique enterprise environments and/or business needs that may make the latest release less desirable and/or suitable.

Patent document US 2006/080656 A1 (CAIN NIGEL [US] et al), 13 April 2006 discloses a method of instructing users in the implementation of a patch management process, and patent document US 2010/257518 A1 (BARATTI PAOLO [IT] et al) 7 October 2010 concerns the automatic recommendation of an upgrade approach for a customizable software product.

There is generally a lack of dynamic software inventory management tools that provide tailored recommendations and insights to clients regarding available updates for their software inventory. Providing such recommendations and insights may encourage clients to apply updates that are tailored to their specific needs and enterprise environments. This may increase trust between the clients and their vendors. A need exists, therefore, for systems and methods that provide these advantages related to dynamic software inventory management.

### SUMMARY

This summary is provided to introduce a selection of concepts in a simplified form that are further described below in the Detailed Description section. This summary is not intended to identify or exclude key features or essential features of the claimed subject matter, nor is it intended to be used as an aid in determining the scope of the claimed subject matter.

According to one aspect, embodiments relate to a method for providing a dynamic inventory tool. The method includes receiving at least one definitions file; scanning a file system based on the at least one definitions file; and providing at least one recommendation regarding updating the software on the file system based on the at least one definitions file.

In some embodiments, the at least one definitions file comprises data for identifying the software on the file system.

In some embodiments, the at least one definitions file comprises at least one unique identifier associated with the software on the file system.

In some embodiments, the scanning the file system based on the at least one definitions file comprises matching at least one unique identifier with a corresponding executable file associated with the software on the file system.

In some embodiments, the at least one unique identifier is generated from at least one cryptographic hash functions.

In some embodiments, the at least one definitions file is a JSON file.

In some embodiments, providing the at least one recommendation comprises: detecting software matching at least one rule on the file system; and determining the at least one recommendation based on the at least one matching rule.

In some embodiments, wherein the providing at least one recommendation is based on feedback data associated with previous recommendations regarding updating the software on the file system.

In some embodiments, the at least one recommendation indicates whether the software on the file system is up to date.

In some embodiments, the at least one recommendation comprises at least one of a recommended software version for updating the software on the file system or a benefit for updating the software on the file system.

In some embodiments, providing the at least one recommendation comprises generating an output page displaying content associated with the at least one recommendation, wherein the content is color-coded based on whether each recommendation indicates out-of-date software.

According to another aspect, embodiments relate to a system for providing a dynamic inventory tool. The system includes a rules module for storing at least one definitions files; and a processor executing instructions stored on memory to perform the steps of: receiving the at least one definitions files from the rules module; scanning a file system based on the at least one definitions files; and providing at least one recommendations regarding updating the software on the file system based on the at least one definitions files.

In some embodiments, the at least one definitions file comprises at least one unique identifier associated with the software on the file system.

In some embodiments, scanning the file system based on the at least one definitions file comprises matching each of the at least one unique identifier with a corresponding executable file associated with the software on the file system.

In some embodiments, the providing the at least one recommendation comprises: detecting at least one rule matching the software on the file system; and determining the at least one recommendation based on the at least one rule.

In some embodiments, the at least one recommendation comprises at least one of a recommended software version for updating the software on the file system or a benefit for updating the software on the file system.

According to yet another aspect, embodiments relate to a computer program product embodied in a non-transitory computer readable storage medium and comprising computer instructions for receiving at least one definitions file; scanning a file system associated based on the at least one definitions file; and providing at least one recommendation regarding updating the software on the file system based on the at least one definitions file.

In some embodiments, the at least one definitions file comprises at least one unique identifier associated with the software on the file system.

In some embodiments, providing the at least one recommendation comprises: detecting at least one rule matching the software on the file system; and determining the at least one recommendation based on the at least one rule.

In some embodiments, the at least one recommendation comprises at least one of a recommended software version for updating the software on the file system or a benefit for updating the software on the file system.

### BRIEF DESCRIPTION OF DRAWINGS

Non-limiting and non-exhaustive embodiments of the invention are described with reference to the following figures, wherein like reference numerals refer to like parts throughout the various views unless otherwise specified.
FIG. 1A illustrates a system for providing dynamic software inventory management in accordance with one embodiment.
FIG. 1B illustrates a system for providing dynamic software inventory management in accordance with one embodiment.
FIG. 2 depicts a flowchart of a method for providing dynamic software inventory management in accordance with one embodiment.
FIG. 3 illustrates a user interface for enabling a user to view content related to dynamic software inventory management in accordance with one embodiment.
FIG. 4 illustrates an output page in accordance with one embodiment.

### DETAILED DESCRIPTION

Various embodiments are described more fully below with reference to the accompanying drawings, which form a part hereof, and which show specific exemplary embodiments. However, the concepts of the present disclosure may be implemented in many different forms and should not be construed as limited to the embodiments set forth herein; rather, these embodiments are provided as part of a thorough and complete disclosure, to fully convey the scope of the concepts, techniques and implementations of the present disclosure to those skilled in the art. Embodiments may be practiced as methods, systems or devices. Accordingly, embodiments may take the form of a hardware implementation, an entirely software implementation or an implementation combining software and hardware aspects. The following detailed description is, therefore, not to be taken in a limiting sense.

Reference in the specification to "one embodiment" or to "an embodiment" means that a particular feature, structure, or characteristic described in connection with the embodiments is included in at least one example implementation or technique in accordance with the present disclosure. The appearances of the phrase "in one embodiment" in various places in the specification are not necessarily all referring to the same embodiment. The appearances of the phrase "in some embodiments" in various places in the specification are not necessarily all referring to the same embodiments.

Some portions of the description that follow are presented in terms of symbolic representations of operations on non-transient signals stored within a computer memory. These descriptions and representations are used by those skilled in the data processing arts to most effectively convey the substance of their work to others skilled in the art. Such operations typically require physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

However, all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices. Portions of the present disclosure include processes and instructions that may be embodied in software, firmware or hardware, and when embodied in software, may be downloaded to reside on and be operated from different platforms used by a variety of operating systems.

The present disclosure also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each may be coupled to a computer system bus. Furthermore, the computers referred to in the specification may include a single processor or may be architectures employing multiple processor designs for increased computing capability.

The processes and displays presented herein are not inherently related to any particular computer or other apparatus. Various general-purpose systems may also be used with programs in accordance with the teachings herein, or it may prove convenient to construct more specialized apparatus to perform one or more method steps. The structure for a variety of these systems is discussed in the description below. In addition, any particular programming language that is sufficient for achieving the techniques and implementations of the present disclosure may be used. A variety of programming languages may be used to implement the present disclosure as discussed herein.

In addition, the language used in the specification has been principally selected for readability and instructional purposes and may not have been selected to delineate or circumscribe the disclosed subject matter. Accordingly, the present disclosure is intended to be illustrative, and not limiting, of the scope of the concepts discussed herein.

As discussed above, currently available techniques for providing software inventory management are insufficient and ineffective. The embodiments herein provide techniques for dynamic software inventory management in an environment offering installed software from a variety of third-party vendors. Moreover, certain embodiments are useful in an enterprise software environment (e.g., zOS), where users may desire to, e.g., install a patch addressing a certain issue in lieu of performing a full major or minor version upgrade of their installed software. These embodiments may include receiving at least one definitions file; scanning a file system associated with a client based on the at least one definitions file; generating an inventory of software on the file system; and providing at least one recommendation to the client regarding updating the software on the file system based on the at least one definitions files.

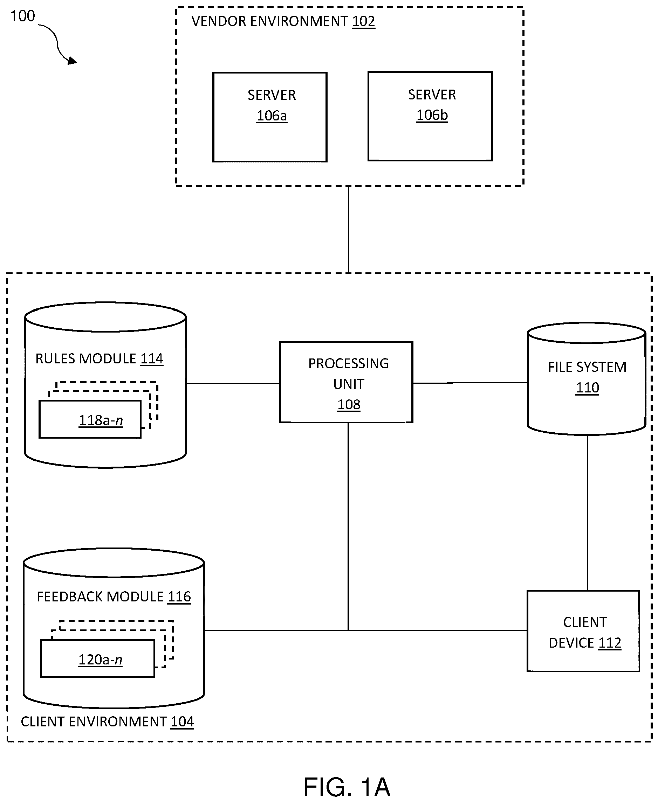

FIG. 1A illustrates a system 100 for providing dynamic software inventory management in accordance with one embodiment. The system 100 may include any number of components for performing operations related to providing dynamic software inventory management. As shown, for example, the system 100 may include or otherwise deploy a vendor environment 102 and a client environment 104. The system 100 may be implemented within any suitable computing environment, such as a cloud-based computing environment, a distributed computing environment, and/or a virtualized computing environment.

The vendor environment 102 may represent any suitable computing environment associated with one or more vendors providing software solutions (e.g., applications, services, microservices, web content, etc.) to clients. In the context of the present application, "client" may refer to any paying or non-paying entity (e.g., a person, a customer, a business, an organization, etc.) that may use software solutions received from a computing environment.

As shown, the vendor environment 102 may provide software solutions (and/or any other suitable data) to the client environment 104. The vendor environment 102 may be implemented by any suitable combination of computing resources. As shown, for example, the vendor environment 102 may include or otherwise deploy one or more servers 106 (e.g., servers 106a and 106b). Servers 106 may be implemented by any suitable type of server, such as a web server, a database server, an application server, and/or a virtualization server. Servers 106 may be configured to generate and/or provide software packages to the client environment 104. Each server 106 may be associated with a particular vendor. While the servers 106 are shown as being deployed at the vendor environment 102, it is to be appreciated that the servers 106 may be deployed at any suitable computing environment, including remote environments outside of the vendor environment 102.

The client environment 104 may represent any suitable computing environment associated with a client of the vendor environment 102. The client environment 104 may be implemented by any suitable combination of computing resources. As shown, for example, the client environment 104 may include or otherwise deploy a processing unit 108, a file system 110, a client device 112, a rules module 114, and a feedback module 116.

The processing unit 108 may represent one or more general-purpose processing devices such as a microprocessor, central processing unit, and/or the like. More particularly, the processing unit 108 may be a complex instruction set computing ('CISC') microprocessor, reduced instruction set computing ('RISC') microprocessor, very long instruction word ('VLIW') microprocessor, and/or a processor implementing other instruction sets or processors implementing a combination of instruction sets. The processing unit 108 may also be one or more special-purpose processing devices such as an ASIC, an FPGA, a digital signal processor ('DSP'), network processor, and/or the like. The processing unit 108 may be configured to execute any number of operations by executing instructions on memory. For example, as described in detail herein, the processing unit 108 may execute operations related to providing recommendations regarding updating software on the file system 110.

The client device 112 may include any suitable computing device (e.g., a desktop computer, a laptop, a smartphone, a tablet, a server, a network device, etc.) configured to perform various computing operations for a client of a vendor. The client device 112 may be configured to initiate software updates for software stored on the file system 110 (e.g., based on recommendations received from the processing unit 108).

The file system 110 may be configured to manage and/or organize data stored at various storage resources. For example, the file system 110 may manage and/or organize various software packages for deploying software developed by various vendors, such as binary files, executable files, libraries, configuration files, documentation, dependencies, and/or installer packages. The file system 110 may be implemented using any suitable file system technologies. For example, the file system 110 may be implemented by any suitable file system type, such as file allocation tables (FAT), new technology file system (NTFS), hierarchical file system plus (HFS+), extended file system (EXT), and/or resilient file system (ReFS). In some embodiments, the file system 110 may manage and/or organize data stored at the client device 112. In this manner, the file system 110 may be associated with a particular client of a vendor. While the file system 110 is illustrated as a separate component from the client device 112, it is to be appreciated that the file system 110 may be deployed at the client device 112 (e.g., to manage files stored at the client device 112).

The rules module 114 may be configured to store any suitable data related to software inventory management, such as definitions, software versions, matching rules, policies, strategies, and/or recommendations. The rules module 114 may be implemented by any suitable storage resources for storing the data, such as storage disks, hard-disk drives, SSDs, flash memory-based storage, any type of solid-state non-volatile memory, and/or any other type of non-mechanical storage device. In some embodiments, data stored at the rules module 114 may be managed by the file system 110 (e.g., as files within the file system 110). While one rules module is illustrated within the system 100, it is to be appreciated that the system 100 may include any number of rules modules.

As shown, the rules module 114 may organize the data as one or more definitions files 118 (e.g., definitions files 118a, 118b,..., 118n). According to the invention, the definitions files 118 contain unique identifiers related to software on the file system 110. The unique identifiers may include any identifiers associated with a particular file stored on the file system 110, such as hash values, digital signatures, version numbers, license keys, and/or code signatures. The unique identifiers are used to identify files on the file system 110, such as executable files for a particular version of software on the file system 110. In some embodiments, the unique identifiers may be generated from cryptographic hash functions. The definitions files 118 may be formatted as any suitable file type, such as a JSON file, a YAML file, an XML file, and/or a TOML file.

The rules module 114 may receive the definitions files 118 from any suitable source associated with the vendor environment 102, such as the vendor environment 102 (and/or a component of the vendor environment 102), a remote server associated with the vendor environment 102, and/or a remote application associated with the vendor environment 102. Specifically, the rules module 114 may receive the definitions files 118 from the servers 106. The servers 106 (and/or any component deployed at the vendor environment 102) may generate and/or store the definitions files 118. The vendor environment 102 may generate the definitions files 118 based on various demands and/or needs of the associated vendors. For example, the vendor environment 102 may generate the definitions files 118 based on specifications associated with the vendors.

The feedback module 116 may be configured to store feedback data. The feedback data may include any data related to instances of previous software updates, such as timestamps related to previous updates, files contained in previous updates, identifiers related to previous updates, performance metrics related to previous updates, error logs related to previous updates, user feedback related to previous updates, survey reports related to previous updates, security threats related to previous updates, and/or version numbers related to previous updates. Specifically, the feedback data may include data related to one or more effects of instances of previous updates. The previous updates may include updates that client device 112 (and/or any other suitable device) initiated in the past (e.g., in response to a previous recommendation). As shown, the feedback data may be stored as feedback files 120 (e.g., feedback files 120a, 120b,..., 120n) In some embodiments, the feedback data may be managed by the file system 110 (e.g., as files within the file system 110).

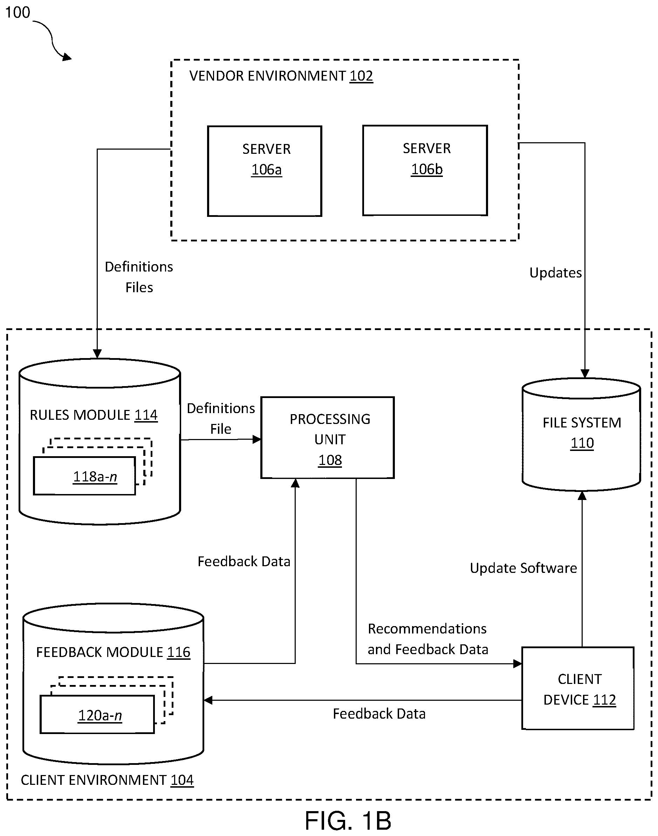

FIG. 1B illustrates an alternate embodiment of the system 100 for providing dynamic software inventory management. In some embodiments, the system 100 may be configured to provide recommendations regarding updating software stored on the file system 110. The system 100 may provide the recommendations to the client device 112 (e.g., for viewing by a client). The client device 112 may initiate a request for the recommendations (e.g., by way of input from a user). The processing unit 108 may detect the request and provide the requested recommendations. Alternatively and/or additionally, the processing unit 108 may provide the recommendations automatically without user input (e.g., periodically based on a predetermined time period).

As shown, the rules module 114 may receive definitions files (e.g., definitions files 118) from the vendor environment 102. The definitions files may be generated by one or more components of the vendor environment 102, such the servers 106. The rules module 114 may store the definitions files at one or more storage resources.

As shown, the processing unit 108 may receive the definitions files (e.g., definitions files 118) from the rules module 114. The definitions files may contain data for identifying software on the file system 110. The processing unit 108 may scan the file system 110 based on the definitions files to identify software on the file system 110. For example, the processing unit 108 may match one or more unique identifiers contained in the definitions files with files (e.g., executable files) associated with particular versions of software on the file system 110. The processing unit 108 may generate an inventory of software on the file system 110. The inventory may indicate any number of files (e.g., executable files) associated with particular versions of software on the file system 110. For example, the inventory may indicate a binary file associated with a particular version of an application stored on the file system 110 and in use by the client device 112. The inventory may indicate the locations of the files on the file system 110.

The processing unit 108 may determine one or more recommendations regarding updating the software on the file system 110 based on the definitions file. The recommendations may indicate any suitable information related to updating the software on the file system 110, such as identifiers and/or names of the software, current versions of the software, recommended updates for the software (e.g., recommended versions), indicators of whether the software is out-of-date, indicators of how severely the software is out-of-date, and/or recommended methods for updating the software (e.g., recommended installers). For example, the recommendations may indicate that the software is out of date and that the client device 112 should update the software to a specified version.

In some embodiments, the recommendations may indicate effects of applying the update on the software, such as benefits of applying the update and/or drawbacks of applying the update. The processing unit 108 may present the effects as reasons why the recommendations should be applied. In some embodiments, the recommendations may include effects of not applying an update on the software, such as benefits of not applying the update and/or drawbacks of not applying the update.

In some embodiments, the processing unit 108 may match one or more rules with the software and determine the recommendations based on the matching rules. For example, the processing unit 108 may detect rules (e.g., by scanning the rules module 114) that correspond to the unique identifiers matching the software. The rules may be stored at the rules module 114 (e.g., within the definitions file). The rules may indicate any suitable condition for recommending an update, such as the software being out of date, an occurrence of a security threat, a performance level being below a predetermined threshold, and/or a benefit level being above a predetermined threshold. For example, the rules may indicate that a software should be updated to the latest version if the software is out of date. The processing unit 108 may determine that a condition is satisfied based on one or more policies. The policies may indicate whether a condition associated with a rule is satisfied or not. The policies may be stored at the rules module 114 (e.g., within the definitions file).

As shown, the processing unit 108 may use feedback data from the feedback module 116 to determine the recommendations. The feedback data may relate to previous updates that the client device 112 (and/or similar devices and/or clients) applied to the software on the file system 110 based on previous recommendations. The feedback data may be stored on the feedback module 116 (e.g., as feedback files 120). The feedback data may include any data related to the previous updates, such as effects of the previous updates (e.g., benefits of the previous updates), a number of users that have applied the previous updates, the files contained in a previous update, the files altered by a previous update, a number of users that have declined the update, and/or timestamps of the previous updates. The feedback data may include objective data (e.g., log data, objective benefits of the update) and/or subjective data from clients (e.g., user surveys). The recommendations, either partially and/or as a whole, may be based on the feedback data. For example, indicated effects provided by the recommendations may be based on feedback data that includes effects of previous updates.

In some embodiments, the recommendations may be based on feedback data that relates only to updates applied to the software on the file system 110. In some embodiments, the recommendations may be based on feedback data that relates to updates applied to additional software similar to the software on the file system 110. For example, if the software on the file system 110 includes a messaging application, the feedback data used for the recommendations may relate to updates applied to similar messaging applications. The processing unit 108 may determine similarity scores for the additional software in relation to the software on the file system 110. The feedback data used for the recommendations may relate only to updates applied to additional software with similar scores above a predetermined threshold.

While the recommendations are described as indicating the feedback data, it is to be appreciated that the feedback data may be provided to the client device 112 separately from the recommendations. For example, as shown, the feedback data may be provided to the client device 112 alongside the recommendations. Alternatively and/or in addition, the feedback data may be provided to the client device 112 periodically (e.g., daily, weekly, monthly, etc.).

As shown, the processing unit 108 may provide the recommendations to the client device 112 in any suitable format for viewing by a client. For example, the processing unit 108 may generate an output page (e.g., as a web page) containing content associated with the recommendations. The content may be formatted for readability and/or aesthetics, such as color-coding the content based on whether each recommendation indicates out-of-date software.

As shown, the client device 112 may initiate one or more updates for updating the software on the file system 110 based on the recommendations received from the processing unit 108. For example, the client device 112 may select the updates at a user interface (e.g., for a centralized update service, an application store, a web page, a terminal etc.) rendered by the client device 112. The updates may be generated at the vendor environment 102 (e.g., at the servers 106) and then pushed to the file system 110.

The processing unit 108 may detect that the client device 112 has initiated the one or more updates for the software on the file system 110. As shown, the feedback module 116 may receive and store feedback data from the client device 112 based on the applied updates. In some embodiments, the feedback module 116 may receive feedback data from the client device 112 after each update that is applied. Alternatively and/or additionally, the feedback module 116 may periodically receive feedback data from the client device 112 (e.g., daily, weekly, monthly, etc.). In this manner, the feedback module 116 may be continuously updated as new updates are applied.

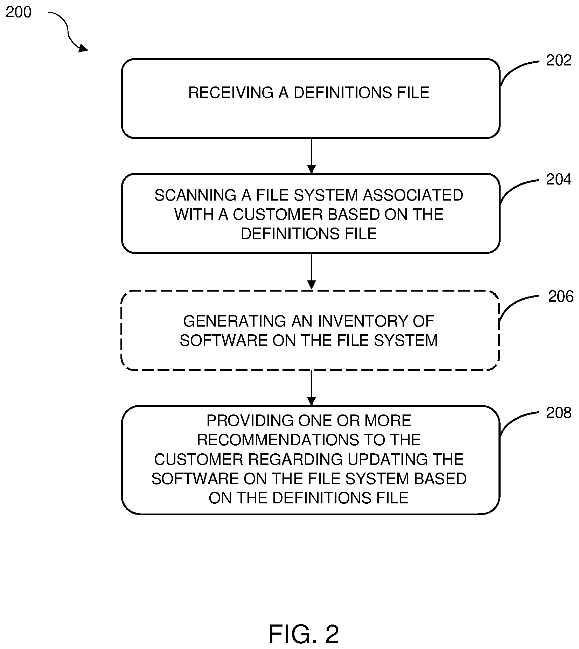

FIG. 2 depicts a flowchart of a method 200 for providing dynamic software inventory management in accordance with one embodiment. The system 100 and/or components thereof may perform the steps of method 200.

Step 202 involves receiving one or more definitions files. The definitions files may include any of the definitions files described herein, such as the definitions files 118.

Step 204 involves scanning a file system associated with a client based on the definitions files. The file system may be any of the file systems described herein, such as the file system 110. The client may be any user associated with the file system. For example, the client may be an individual that has purchased a license to use the file system.

Step 206 involves optionally generating an inventory of software on the file system.

Step 208 involves providing one or more recommendations to the client regarding updating the software on the file system based on the definitions files.

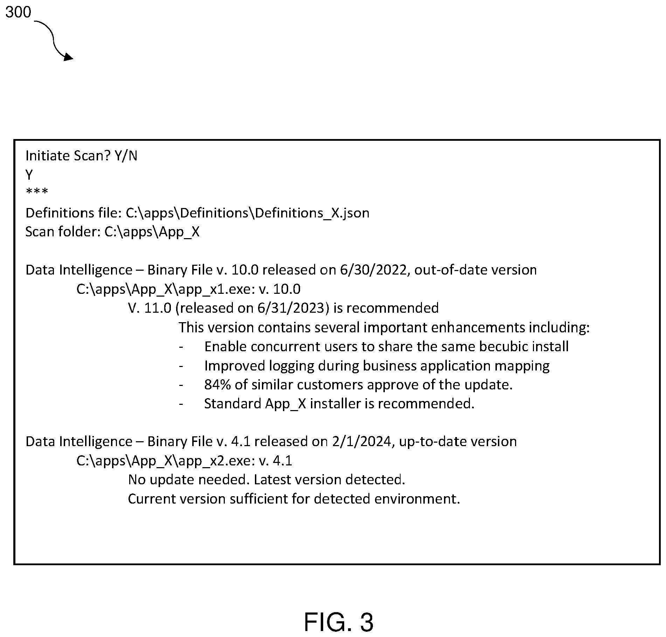

FIG. 3 illustrates a user interface 300 for enabling a user to view content related to dynamic software inventory management. For example, the user interface 300 may present recommendations to a user regarding updating software associated with the user.

The user interface 300 may be rendered by any suitable application and/or service, such as a centralized update service, an application store, a web page, and/or a terminal. As shown, the user may input a selection (e.g., "Y") to scan a file system associated with the user. A processing unit (e.g., processing unit 108) may scan the file system (e.g., at step 204) and provide one or more recommendations for updating software on the file system to the user interface 300.

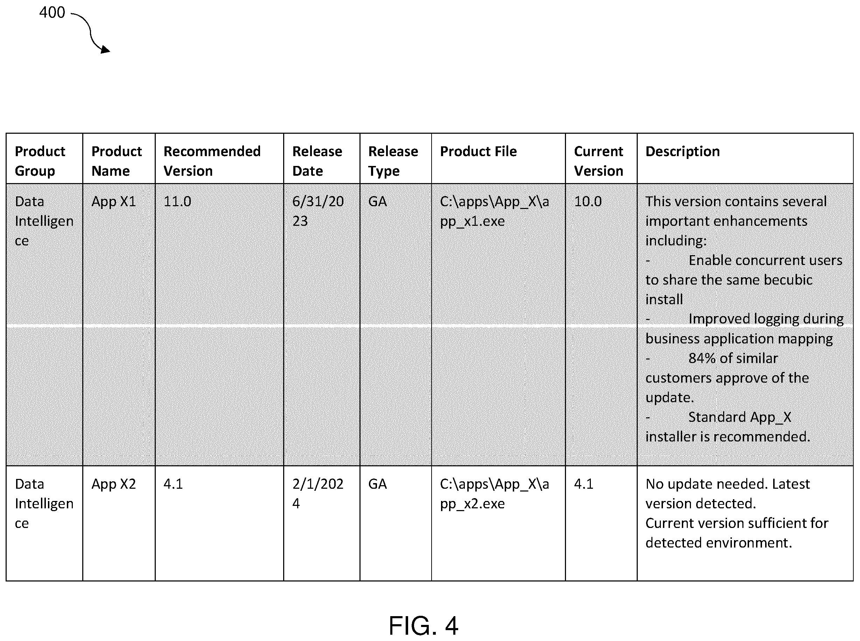

While the recommendations are shown as being presented within the user interface 300, in some embodiments, the recommendations may be presented in a dedicated output page. To illustrate, FIG. 4 presents an output page 400 in accordance with one embodiment.

The output page 400 may present the recommendations (and/or other content related to dynamic software inventory management) in a user-friendly and/or aesthetic format. For example, as shown, the output page 400 may be formatted as a table. Each row of the output page 400 may be associated with a particular recommendation. Each column of the output page 400 may indicate a particular field associated with the recommendations. In some embodiments, the output page 400 may color-code any combination of the recommendations. For example, the output page 400 may color-code recommendations based on whether the recommendations are associated with out-of-date software. The output page 400 may select different color codes for the recommendations based on how severely the associated software is out-of-date. For example, software that is two versions behind a recommended version may be assigned a different color than software that is five versions behind a recommended version. It is to be appreciated, however, that the output page 400 may indicate which recommendations are out-of-date using any suitable type of indicator, such as a numerical rating, a graphical rating, and/or a percentage value.

The methods, systems, and devices discussed above are examples. Various configurations may omit, substitute, or add various procedures or components as appropriate. For instance, in alternative configurations, the methods may be performed in an order different from that described, and that various steps may be added, omitted, or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Embodiments of the present disclosure, for example, are described above with reference to block diagrams and/or operational illustrations of methods, systems, and computer program products according to embodiments of the present disclosure. The functions/acts noted in the blocks may occur out of the order as shown in any flowchart. For example, two blocks shown in succession may in fact be executed substantially concurrent or the blocks may sometimes be executed in the reverse order, depending upon the functionality/acts involved. Additionally, or alternatively, not all of the blocks shown in any flowchart need to be performed and/or executed. For example, if a given flowchart has five blocks containing functions/acts, it may be the case that only three of the five blocks are performed and/or executed. In this example, any of the three of the five blocks may be performed and/or executed.

A statement that a value exceeds (or is more than) a first threshold value is equivalent to a statement that the value meets or exceeds a second threshold value that is slightly greater than the first threshold value, e.g., the second threshold value being one value higher than the first threshold value in the resolution of a relevant system. A statement that a value is less than (or is within) a first threshold value is equivalent to a statement that the value is less than or equal to a second threshold value that is slightly lower than the first threshold value, e.g., the second threshold value being one value lower than the first threshold value in the resolution of the relevant system.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the scope of the disclosure.

Having described several example configurations, various modifications and alternative constructions may be used without departing from the scope of the invention, which is defined by the appended independent claims. For example, the above elements may be components of a larger system, wherein other rules may take precedence over or otherwise modify the application of various implementations or techniques of the present disclosure. Also, a number of steps may be undertaken before, during, or after the above elements are considered.

Having been provided with the description and illustration of the present application, one skilled in the art may envision variations, modifications, and alternate embodiments falling within the general inventive concept discussed in this application that do not depart from the scope of the following claims.

## Claims

1. A method for providing dynamic software inventory management, the method comprising:
receiving at least one definitions file (202), where the at least one definitions file comprises one or more unique identifiers used to identify files stored on a file system, where the files are executable files for a particular version of software on the file system;
scanning the file system (204) based on the at least one definitions file;
generating an inventory (206) of software stored on the file system, the inventory indicating a number of executable files associated with particular versions of software on the file system; and
providing at least one recommendation (208) regarding updating the software on the file system based on the at least one definitions file.

2. The method of claim 1, wherein the scanning the file system based on the at least one definitions file comprises matching at least one unique identifier with a corresponding executable file associated with the software on the file system.

3. The method of claim 1, wherein the at least one unique identifier is generated from at least one cryptographic hash functions.

4. The method of claim 1, wherein the at least one definitions file is a JSON file.

5. The method of claim 1, wherein providing the at least one recommendation comprises:
detecting software matching at least one rule on the file system; and
determining the at least one recommendation based on the at least one matching rule.

6. The method of claim 1, wherein the providing at least one recommendation is based on feedback data associated with previous recommendations regarding updating the software on the file system.

7. The method of claim 1, wherein the at least one recommendation indicates whether the software on the file system is up to date.

8. The method of claim 1, wherein the at least one recommendation comprise a recommended software version for updating the software on the file system.

9. The method of claim 1, the providing the at least one recommendation comprises generating an output page displaying content associated with the at least one recommendation, wherein the content is color-coded based on whether each recommendation indicates out-of-date software.

10. A system for providing dynamic software inventory management, the system comprising:
a rules module for storing at least one definitions file, where the at least one definitions file comprises one or more unique identifiers used to identify files stored on a file system, where the files are executable files for a particular version of software on the file system; and
a processor executing instructions stored on memory to perform the steps of:
receiving the at least one definitions file from the rules module;
scanning the file system based on the at least one definitions file;
generating an inventory of software stored on the file system, the inventory indicating a number of executable files associated with particular versions of software on the file system; and
providing at least one recommendation regarding updating the software on the file system based on the at least one definitions file.

11. The system of claim 10, wherein scanning the file system based on the at least one definitions file comprises matching each of the at least one unique identifier with a corresponding executable file associated with the software on the file system.

12. The system of claim 10, wherein the providing the at least one recommendation comprises:
detecting at least one rule matching the software on the file system; and
determining the at least one recommendation based on the at least one rule.

13. The system of claim 10, wherein the at least one recommendation comprises a recommended software version for updating the software on the file system.

14. A computer program product embodied in a non-transitory computer readable storage medium and comprising computer instructions for:
receiving at least one definitions file, where the at least one definitions file comprises one or more unique identifiers used to identify files stored on a file system, where the files are executable files for a particular version of software on the file system;
scanning the file system based on the at least one definitions file;
generating an inventory of software stored on the file system, the inventory indicating a number of executable files associated with particular versions of software on the file system; and
providing at least one recommendation regarding updating the software on the file system based on the at least one definitions file.

15. The computer program product of claim 14, providing the at least one recommendation comprises:
detecting at least one rule matching the software on the file system; and
determining the at least one recommendation based on the at least one rule.

16. The computer program product of claim 14, wherein the at least one recommendation comprises a recommended software version for updating the software on the file system.

## Patentansprüche

1. Verfahren zur Bereitstellung einer dynamischen Software-Bestandsverwaltung, wobei das Verfahren Folgendes umfasst:
Empfangen mindestens einer Definitionsdatei (202), wobei die mindestens eine Definitionsdatei eine oder mehrere eindeutige Kennungen umfasst, die verwendet werden, um auf einem Dateisystem gespeicherte Dateien zu identifizieren, wobei die Dateien ausführbare Dateien für eine bestimmte Softwareversion auf dem Dateisystem sind;
Scannen des Dateisystems (204) basierend auf der mindestens einen Definitionsdatei;
Erzeugen eines Bestands (206) von auf dem Dateisystem gespeicherter Software, wobei der Bestand eine Anzahl von ausführbaren Dateien angibt, die mit bestimmten Softwareversionen auf dem Dateisystem verknüpft sind; und
Bereitstellen mindestens einer Empfehlung (208) bezüglich einer Aktualisierung der Software auf dem Dateisystem basierend auf der mindestens einen Definitionsdatei.

2. Verfahren nach Anspruch 1, wobei das Scannen des Dateisystems basierend auf der mindestens einen Definitionsdatei das Abgleichen mindestens einer eindeutigen Kennung mit einer entsprechenden ausführbaren Datei umfasst, die mit der Software auf dem Dateisystem verknüpft ist.

3. Verfahren nach Anspruch 1, wobei die mindestens eine eindeutige Kennung aus mindestens einer kryptografischen Hash-Funktion erzeugt wird.

4. Verfahren nach Anspruch 1, wobei die mindestens eine Definitionsdatei eine JSON-Datei ist.

5. Verfahren nach Anspruch 1, wobei das Bereitstellen der mindestens einen Empfehlung Folgendes umfasst:
Erkennen von Software, die mindestens einer Regel auf dem Dateisystem entspricht; und
Bestimmen der mindestens einen Empfehlung basierend auf der mindestens einen entsprechenden Regel.

6. Verfahren nach Anspruch 1, wobei das Bereitstellen mindestens einer Empfehlung auf Feedback-Daten basiert, die mit vorherigen Empfehlungen bezüglich der Aktualisierung der Software auf dem Dateisystem verknüpft sind.

7. Verfahren nach Anspruch 1, wobei die mindestens eine Empfehlung angibt, ob die Software auf dem Dateisystem aktuell ist.

8. Verfahren nach Anspruch 1, wobei die mindestens eine Empfehlung eine empfohlene Softwareversion zur Aktualisierung der Software auf dem Dateisystem umfasst.

9. Verfahren nach Anspruch 1, wobei das Bereitstellen der mindestens einen Empfehlung das Erzeugen einer Ausgabeseite umfasst, die mit der mindestens einen Empfehlung verknüpfte Inhalte anzeigt, wobei die Inhalte basierend darauf farbcodiert sind, ob jede Empfehlung veraltete Software angibt.

10. System zur Bereitstellung einer dynamischen Software-Bestandsverwaltung, wobei das System Folgendes umfasst:
ein Regelmodul zum Speichern mindestens einer Definitionsdatei, wobei die mindestens eine Definitionsdatei eine oder mehrere eindeutige Kennungen umfasst, die verwendet werden, um auf einem Dateisystem gespeicherte Dateien zu identifizieren, wobei die Dateien ausführbare Dateien für eine bestimmte Softwareversion auf dem Dateisystem sind; und
einen Prozessor, der im Speicher gespeicherte Anweisungen ausführt, um die folgenden Schritte auszuführen:
Empfangen der mindestens einen Definitionsdatei von dem Regelmodul;
Scannen des Dateisystems basierend auf der mindestens einen Definitionsdatei;
Erzeugen eines Bestands von auf dem Dateisystem gespeicherter Software, wobei der Bestand eine Anzahl von ausführbaren Dateien angibt, die mit bestimmten Softwareversionen auf dem Dateisystem verknüpft sind; und
Bereitstellen mindestens einer Empfehlung bezüglich einer Aktualisierung der Software auf dem Dateisystem basierend auf der mindestens einen Definitionsdatei.

11. System nach Anspruch 10, wobei das Scannen des Dateisystems basierend auf der mindestens einen Definitionsdatei das Abgleichen jeder der mindestens einen eindeutigen Kennung mit einer entsprechenden ausführbaren Datei umfasst, die mit der Software auf dem Dateisystem verknüpft ist.

12. System nach Anspruch 10, wobei das Bereitstellen der mindestens einen Empfehlung Folgendes umfasst:
Erkennen mindestens einer Regel, die der Software auf dem Dateisystem entspricht; und
Bestimmen der mindestens einen Empfehlung basierend auf der mindestens einen Regel.

13. System nach Anspruch 10, wobei die mindestens eine Empfehlung eine empfohlene Softwareversion zur Aktualisierung der Software auf dem Dateisystem umfasst.

14. Computerprogrammprodukt, das in einem nicht-flüchtigen, computerlesbaren Speichermedium verkörpert ist und Computeranweisungen umfasst zum:
Empfangen mindestens einer Definitionsdatei, wobei die mindestens eine Definitionsdatei eine oder mehrere eindeutige Kennungen umfasst, die verwendet werden, um auf einem Dateisystem gespeicherte Dateien zu identifizieren, wobei die Dateien ausführbare Dateien für eine bestimmte Softwareversion auf dem Dateisystem sind;
Scannen des Dateisystems basierend auf der mindestens einen Definitionsdatei; Erzeugen eines Bestands von auf dem Dateisystem gespeicherter Software, wobei der Bestand eine Anzahl von ausführbaren Dateien angibt, die mit bestimmten Softwareversionen auf dem Dateisystem verknüpft sind; und
Bereitstellen mindestens einer Empfehlung bezüglich einer Aktualisierung der Software auf dem Dateisystem basierend auf der mindestens einen Definitionsdatei.

15. Computerprogrammprodukt nach Anspruch 14, wobei das Bereitstellen der mindestens einen Empfehlung Folgendes umfasst:
Erkennen mindestens einer Regel, die der Software auf dem Dateisystem entspricht; und
Bestimmen der mindestens einen Empfehlung basierend auf der mindestens einen Regel.

16. Computerprogrammprodukt nach Anspruch 14, wobei die mindestens eine Empfehlung eine empfohlene Softwareversion zur Aktualisierung der Software auf dem Dateisystem umfasst.

## Revendications

1. Méthode pour fournir une gestion dynamique d'inventaire de logiciel, la méthode comprenant :
la réception d'au moins un fichier de définitions (202), où l'au moins un fichier de définitions comprend un ou plusieurs identifiants uniques utilisés pour identifier des fichiers stockés sur un système de fichiers, où les fichiers sont des fichiers exécutables pour une version particulière de logiciel sur le système de fichiers ;
le balayage du système de fichiers (204) sur la base de l'au moins un fichier de définitions ;
la génération d'un inventaire (206) de logiciel stocké sur le système de fichiers, l'inventaire indiquant un nombre de fichiers exécutables associés à des versions particulières de logiciel sur le système de fichiers ; et
la fourniture d'au moins une recommandation (208) concernant la mise à jour du logiciel sur le système de fichiers sur la base de l'au moins un fichier de définitions.

2. Méthode selon la revendication 1, dans laquelle le balayage du système de fichiers sur la base de l'au moins un fichier de définitions comprend le fait de faire coïncider au moins un identifiant unique avec un fichier exécutable correspondant associé au logiciel sur le système de fichiers.

3. Méthode selon la revendication 1, dans laquelle l'au moins un identifiant unique est généré à partir d'au moins une fonction de hachage cryptographique.

4. Méthode selon la revendication 1, dans laquelle l'au moins un fichier de définitions est un fichier JSON.

5. Méthode selon la revendication 1, dans laquelle la fourniture de l'au moins une recommandation comprend :
la détection d'un logiciel coïncidant avec au moins une règle sur le système de fichiers ; et
la détermination de l'au moins une recommandation sur la base de l'au moins une règle de coïncidence.

6. Méthode selon la revendication 1, dans laquelle la fourniture d'au moins une recommandation est basée sur des données de rétroaction associées à des recommandations précédentes concernant la mise à jour du logiciel sur le système de fichiers.

7. Méthode selon la revendication 1, dans laquelle l'au moins une recommandation indique si le logiciel sur le système de fichiers est à jour.

8. Méthode selon la revendication 1, dans laquelle l'au moins une recommandation comprend une version de logiciel recommandée pour mettre à jour le logiciel sur le système de fichiers.

9. Méthode selon la revendication 1, la fourniture de l'au moins une recommandation comprend la génération d'une page de sortie affichant un contenu associé à l'au moins une recommandation, dans laquelle le contenu est codé en couleur sur la base du fait que chaque recommandation indique ou non un logiciel obsolète.

10. Système pour fournir une gestion dynamique d'inventaire de logiciel, le système comprenant :
un module de règles pour stocker au moins un fichier de définitions, dans lequel l'au moins un fichier de définitions comprend un ou plusieurs identifiants uniques utilisés pour identifier des fichiers stockés sur un système de fichiers, dans lequel les fichiers sont des fichiers exécutables pour une version particulière de logiciel sur le système de fichiers ; et
un processeur exécutant des instructions stockées sur une mémoire pour réaliser les étapes consistant à :
recevoir l'au moins un fichier de définitions à partir du module de règles ;
balayer le système de fichiers sur la base de l'au moins un fichier de définitions ;
générer un inventaire de logiciel stocké sur le système de fichiers, l'inventaire indiquant un nombre de fichiers exécutables associés à des versions particulières de logiciel sur le système de fichiers ; et
fournir au moins une recommandation concernant la mise à jour du logiciel sur le système de fichiers sur la base de l'au moins un fichier de définitions.

11. Système selon la revendication 10, dans lequel le balayage du système de fichiers sur la base de l'au moins un fichier de définitions comprend le fait de faire coïncider chacun de l'au moins un identifiant unique avec un fichier exécutable correspondant associé au logiciel sur le système de fichiers.

12. Système selon la revendication 10, dans lequel la fourniture de l'au moins une recommandation comprend :
la détection d'au moins une règle coïncidant avec le logiciel sur le système de fichiers ; et
la détermination de l'au moins une recommandation sur la base de l'au moins une règle.

13. Système selon la revendication 10, dans lequel l'au moins une recommandation comprend une version de logiciel recommandée pour mettre à jour le logiciel sur le système de fichiers.

14. Produit programme d'ordinateur incorporé dans un support de stockage non transitoire lisible par ordinateur et comprenant des instructions machine pour :
recevoir au moins un fichier de définitions, dans lequel l'au moins un fichier de définitions comprend un ou plusieurs identifiants uniques utilisés pour identifier des fichiers stockés sur un système de fichiers, dans lequel les fichiers sont des fichiers exécutables pour une version particulière de logiciel sur le système de fichiers ;
balayer le système de fichiers sur la base de l'au moins un fichier de définitions ;
générer un inventaire de logiciel stocké sur le système de fichiers, l'inventaire indiquant un nombre de fichiers exécutables associés à des versions particulières de logiciel sur le système de fichiers ; et
fournir au moins une recommandation concernant la mise à jour du logiciel sur le système de fichiers sur la base de l'au moins un fichier de définitions.

15. Produit programme d'ordinateur selon la revendication 14, la fourniture de l'au moins une recommandation comprend :
la détection d'au moins une règle coïncidant avec le logiciel sur le système de fichiers ; et
la détermination de l'au moins une recommandation sur la base de l'au moins une règle.

16. Produit programme d'ordinateur selon la revendication 14, dans lequel l'au moins une recommandation comprend une version de logiciel recommandée pour mettre à jour le logiciel sur le système de fichiers.
